**Europäisches Patentamt**

**European Patent Office**

**Office européen des brevets**

(11) Veröffentlichungsnummer: **0 413 887 A1**

# (12) EUROPÄISCHE PATENTANMELDUNG

(21) Anmeldenummer: 90102213.7

(22) Anmeldetag: 05.02.90

(51) Int. Cl.⁵: **B60K 37/02**

(30) Priorität: 26.07.89 DE 3924707

(43) Veröffentlichungstag der Anmeldung:
27.02.91 Patentblatt 91/09

(84) Benannte Vertragsstaaten:
**DE ES FR GB**

(71) Anmelder: **VDO Adolf Schindling AG**
**Gräfstrasse 103**
**D-6000 Frankfurt/Main 90(DE)**

(72) Erfinder: **Heinrich, Kurt**
**Gartenstrasse 12**
**D-6390 Usingen 5(DE)**
Erfinder: **Brestel, Karl-Heinz**
**Am Hang 11**
**D-6238 Hofheim/Lorsbach(DE)**

(74) Vertreter: **Klein, Thomas, Dipl.-Ing. (FH)**
**Sodener Strasse 9 Postfach 6140**
**D-6231 Schwalbach a. Ts.(DE)**

(54) Anzeigeinstrument für Kraftfahrzeuge.

(57) Ein Anzeigeinstrument für Kraftfahrzeuge hat hinter einer als Fresnel-Linse ausgebildeten Lupe (3) eine Anzeigefläche (8). Durch die Lupe (3) können diese Anzeigefläche (8) und ein über sie beweglicher Zeiger (6) vergrößert gesehen werden. Mittels einer Verstelleinrichtung (9) kann die Anzeigefläche (8) relativ zur Lupe (3) verschoben werden, so daß das Vergrößerungsverhältnis veränderbar ist.

## ANZEIGEINSTRUMENT FÜR KRAFTFAHRZEUGE

Die Erfindung betrifft ein Anzeigeinstrument für Kraftfahrzeuge mit einer hinter einer Lupe angeordneten Anzeigefläche.

Anzeigeinstrumente dieser Art wurden früher häufig in Kraftfahrzeugen vorgesehen, weil sie relativ klein ausgebildet werden können, dennoch aber einen zum Ablesen des Anzeigeinstrumentes ausreichend großen Sehwinkel ermöglichen.

Viele Menschen haben Schwierigkeiten, im Nahbereich ausreichend gut zu sehen. Für sie wäre es deshalb vorteilhaft, wenn die Anzeigeinstrumente im Kraftfahrzeug großflächig wären oder wenn bei Anordnung hinter einer Lupe diese ein hohes Vergrößerungsverhältnis ermöglichte. Für Personen mit auch im Nahbereich guten Augen sind große oder zu groß erscheinende Anzeigeinstrumente jedoch unerwünscht, weil diese nicht so rasch als Ganzes zu erfassen sind und das Auge über die Anzeigefläche wandern muß.

Bei der Festlegung der Größe eines Anzeigeinstrumentes ist auch zu berücksichtigen, daß langbeinige Fahrer mit ihren Augen einen wesentlich größeren Abstand von den Anzeigeinstrumenten haben als kurzbeinige. Die Anzeigeinstrumente müssen deshalb so großflächig sein, daß sie auch vom vollständig zurückgeschobenen Fahrersitz aus zuverlässig abgelesen werden können.

Der Erfindung liegt die Aufgabe zugrunde, ein Anzeigeinstrument der eingangs genannten Art so auszubilden, daß es von Personen unterschiedlichen Sehvermögens und unabhängig von der Stellung des Fahrersitzes möglichst gleich gut ablesbar ist.

Diese Aufgabe wird erfindungsgemäß auf überraschend einfache Weise gelöst durch eine Verstelleinrichtung zur Veränderung des Sehwinkels der Anzeigefläche.

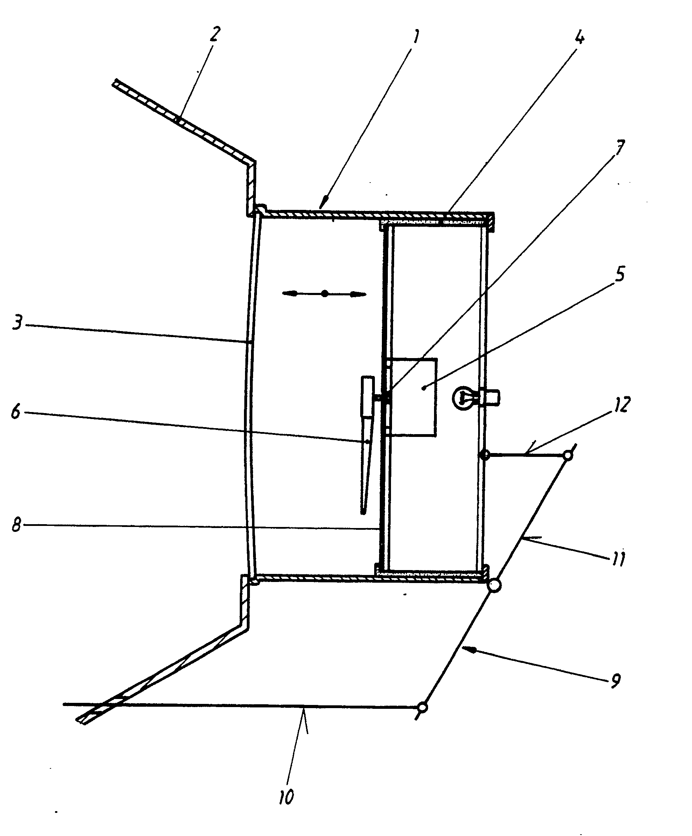

Eine solche Verstelleinrichtung erlaubt es, die Größe der Abbildung der Anzeigefläche individuell einzustellen. Wer im Nahbereich schlecht sieht, kann deshalb eine größere Anzeigefläche wählen als eine Person mit guten Augen. Auch ist es möglich, bei zurückgeschobenem Fahrersitz das Vergrößerungsverhältnis mittels der Verstelleinrichtung zu erhöhen, so daß auch aus der dann größeren Entfernung das Anzeigeinstrument zuverlässig abzulesen ist.

Besonders einfach ist das Anzeigeinstrument gestaltet, wenn die Lupe eine Fresnel-Linse ist, und die Verstelleinrichtung zum Verschieben der Lupe und/oder der Anzeigefläche auf der optischen Achse ausgebildet ist. Man kann dann das Vergrößerungsverhältnis sehr einfach beispielsweise dadurch verändern, daß man das Meßwerk mit der Anzeigefläche relativ zur Fresnel-Linse im Gehäuse des Anzeigeinstruments verschiebt.

Spiegelungen auf dem Anzeigeinstrument kann man dadurch verhindern, daß die Oberfläche der Lupe entspiegelt ist. Diese Ausbildung ist vorteilhafter als die sonst gebräuchliche Maßnahme des Schrägstellens, weil die Lupe möglichst rechtwinklig zur optischen Achse ausgerichtet sein sollte.

Besonders bequem ist das Anzeigeinstrument zu verstellen, wenn gemäß einer anderen Ausgestaltung der Erfindung die Verstelleinrichtung einen Verstellmotor hat.

Verschiedene Benutzer eines Kraftfahrzeugs können die für sie jeweils optimale Einstellung automatisch wiedereinstellen, wenn der Verstellmotor für bestimmte Positionen programmierbar ausgebildet ist.

Bei einem größeren Abstand vom Anzeigeinstrument ist ein höheres Vergrößerungsverhältnis zweckmäßig. Eine manuelle Betätigung der Verstelleinrichtung wird unnötig, wenn gemäß einer besonders vorteilhaften Ausgestaltung der Erfindung der Verstellmotor mit der Verstellung des Fahrersitzes gekoppelt ist.

Alternativ zur Verwendung einer Fresnel-Linse kann man auch eine in ihrer Brennweite veränderliche Lupe benutzen, wenn die Verstelleinrichtung zum Verändern der Brennweite der Lupe ausgebildet ist.

Die Erfindung läßt zahlreiche Ausführungsformen zu. Zur weiteren Verdeutlichung ihres Grundprinzips ist eine davon schematisch in der Zeichnung dargestellt und wird nachfolgend beschrieben.

Die Zeichnung zeigt im Schnitt ein Gehäuse 1 mit einer Blende 2, die eine als Fresnel-Linse ausgebildete Lupe 3 umgibt. Solche Fresnel-Linsen können aus Kunststoff bestehen und sind relativ kostengünstig erhältlich. Hinter der Lupe 3 ist ein Schiebeteil 4 vorgesehen, in welchem ein Meßwerk 5 angeordnet ist. Das Meßwerk 5 vermag eine einen Zeiger 6 tragende Zeigerwelle 7 anzutreiben. Dieser Zeiger 6 bewegt sich über eine Anzeigefläche 8, auf der beispielsweise eine nicht zu sehende Tachometerskala angebracht sein kann.

Das Schiebeteil 4 ist mit einer schematisch dargestellten Verstelleinrichtung 9 verbunden, die eine nach vorn geführte Betätigungsstange 10 hat. Drückt man auf das vordere Ende dieser Betätigungsstange 10, so schwenkt ein mit 11 bezeichneter Hebel entgegen dem Uhrzeigersinn und drückt mit einer Koppel 12 das Schiebeteil 4 näher zur Lupe 3 hin. Dadurch verringert sich das Vergrößerungsverhältnis. Durch Ziehen an der Betätigungsstange 10 kann man anschließend das Vergrößerungsverhältnis wieder erhöhen.

**Ansprüche**

1. Anzeigeinstrument für Kraftfahrzeuge mit einer hinter einer Lupe angeordneten Anzeigefläche, gekennzeichnet durch eine Verstelleinrichtung (9) zur Veränderung des Sehwinkels der Anzeigefläche (8).

2. Anzeigeinstrument nach Anspruch 1, dadurch gekennzeichnet , daß die Lupe (3) eine Fresnel-Linse ist, und die Verstelleinrichtung (9) zum Verschieben der Lupe (3) und/oder der Anzeigefläche (8) auf der optischen Achse ausgebildet ist.

3. Anzeigeinstrument nach den Ansprüchen 1 und 2, dadurch gekennzeichnet , daß die Oberfläche der Lupe (3) entspiegelt ist.

4. Anzeigeinstrument nach zumindest einem der vorangehenden Ansprüche, dadurch gekennzeichnet , daß die Verstelleinrichtung (9) einen Verstellmotor hat.

5. Anzeigeinstrument nach Anspruch 4, dadurch gekennzeichnet , daß der Verstellmotor für bestimmte Positionen programmierbar ausgebildet ist.

6. Anzeigeinstrument nach Anspruch 5, dadurch gekennzeichnet , daß der Verstellmotor mit der Verstellung des Fahrersitzes gekoppelt ist.

7. Anzeigeinstrument nach Anspruch 1, dadurch gekennzeichnet , daß die Lupe (3) eine veränderliche Brennweite hat und die Verstelleinrichtung (9) zum Verändern der Brennweite der Lupe (3) ausgebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN Band 10, Nr. 241 (P-488)(2297), 20. August 1986; & JP-A-61071318 (OMRON TATEISI ELECTRONICS) 12.04.1986 | 1,7 | B 60 K 37/02 |
| X | FR-A-2 134 158 (SEE) * Seite 3, Zeilen 12-20; Figuren * | 1 | |
| A | FR-A-2 412 057 (PEUGEOT-CITROEN) * ganzes Dokument * | 1 | |
| A | PATENT ABSTRACTS OF JAPAN Band 9, Nr. 294 (M-431), 20. November 1985; & JP-A-60131328 (NISSAN) 13.07.1985 | 1,2 | |
| A | PATENT ABSTRACTS OF JAPAN Band 10, Nr. 25 (M-450), 31. Januar 1986; & JP-A-60183240 (NISSAN) 18.09.1985 | 1,2,4,5 | |
| A | PATENT ABSTRACTS OF JAPAN Band 11, Nr. 128 (M-583)(2575), 22. April 1987; & JP-A-61268534 (NISSAN) 28.11.1986 | 1,4-6 | RECHERCHIERTE SACHGEBIETE (Int. Cl.5) |
| A | PATENT ABSTRACTS OF JAPAN Band 12, Nr. 432 (M-763)(3279), 15. November 1988; & JP-A-6316628 (TOYODA GOSEI) 09.07.1988 | 1,2 | B 60 K<br>G 09 F<br>G 01 D<br>G 01 P |

Der vorliegende Recherchenbericht wurde für alle Patentansprüche erstellt

| Recherchenort | Abschlußdatum der Recherche | Prüfer |
|---|---|---|
| Berlin | 26 Oktober 90 | KRIEGER P O |